Europäisches Patentamt

European Patent Office

Office européen des brevets

(11) Veröffentlichungsnummer: **0 498 190 A1**

## (12) EUROPÄISCHE PATENTANMELDUNG

(21) Anmeldenummer: **92100722.5**

(22) Anmeldetag: **17.01.92**

(51) Int. Cl.5: **B65D 65/46**

(30) Priorität: **29.01.91 DE 4102514**

(43) Veröffentlichungstag der Anmeldung:
**12.08.92 Patentblatt 92/33**

(84) Benannte Vertragsstaaten:
**AT BE CH DE DK ES FR GB GR IT LI LU MC NL PT SE**

(71) Anmelder: **Lang, Günter**
**Bahnhofstrasse 7**
**W-8952 Marktoberdorf(DE)**

(72) Erfinder: **Lang, Günter**
**Bahnhofstrasse 7**
**W-8952 Marktoberdorf(DE)**

(74) Vertreter: **Hutzelmann, Gerhard**
**Duracher Strasse 22**
**W-8960 Kempten(DE)**

(54) **Gefäss zur Aufnahme von Nahrungsmitteln.**

(57) Gefäß(1,21) zur Aufnahme von flüssigen und/oder festen Nahrungsmitteln wenigstens während des Verzehrs, wobei die Wände des Gefäßes-(1,21) aus wenigstens drei Schichten gebildet sind, die aus eß- und/oder verrottbarem Material bestehen; dabei ist es besonders günstig, wenn die äußere Schicht(2,22) aus einem verhältnismäßig festen Material besteht, während die Zwischenschicht(3,23) aus einem nicht oder nur schwach härtenden Material besteht, das weitgehend flüssigkeitsbeständig ist.

Fig. 1

EP 0 498 190 A1

Die Erfindung betrifft ein Gefäß zur Aufnahme von flüssigen und/oder festen Nahrungsmitteln wenigstens während des Verzehrs.

Es sind bereits zahlreiche Vorschläge gemacht worden, derartige Gefäße für den Einmalgebrauch herzustellen; dabei wird jedoch die Umwelt stark belastet, da diese Gefäße entweder aus Kunststoff hergestellt oder zumindest mit Kunststoff abgedichtet sind und sich Kunststoff im allgemeinen nur durch Verbrennen entsorgen läßt.

Der Erfindung liegt die Aufgabe zugrunde, Gefäße der eingangs genannten Art vorzuschlagen, die auf einfache und umweltschonende Weise entsorgt werden können.

Diese Aufgabe wird erfindungsgemäß dadurch gelöst, daß die Wände des Gefäßes aus wenigstens drei Schichten gebildet sind, die aus eß- und/oder verrottbarem Material bestehen.

Werden die Gefäße gleichzeitig mit oder im Anschluß an die Nahrungsmittel verzehrt, so besteht überhaupt kein Entsorgungsproblem; durch ihre Verrottbarkeit belasten sie jedoch auch bei einer notwendigen Entsorgung die Umwelt nicht.

Sehr vorteilhaft ist es dabei, wenn erfindungsgemäß die äußere Schicht aus einem verhältnismäßig festen Material besteht, während die Zwischenschicht aus einem nicht oder nur schwach härtenden Material besteht, das weitgehend flüssigkeitsbeständig ist.

Die äußere Schicht übernimmt dabei die notwendige mechanische Festigkeit, während die Zwischenschicht die Abdichtung übernimmt. Es kann dabei vorkommen, daß die dem Nahrungsmittel zugewandte Schicht von diesem leicht angelöst wird; die Zwischenschicht wird dabei jedoch auch von der angelösten Schicht noch soweit geschützt, daß sie nicht beschädigt oder gar abgetragen wird und damit ihre Abdichtfunktion voll erfüllen kann.

Ebenfalls sehr vorteilhaft ist es, wenn gemäß der Erfindung die Innenschicht aus einem weitgehend festen Material besteht.

Damit ist es möglich, die Gefäße auch als Suppentassen oder Teller zu verwenden, da hierdurch sogar eine ausreichende Schnittfestigkeit gegeben ist.

Ein sehr günstiger Aufbau des Gefäßes hat sich erfindungsgemäß dadurch gegeben, daß Außen- und Innenschicht aus einem mehlhaltigen Material bestehen, während die Zwischenschicht fetthaltig ausgebildet ist.

Als mehlhaltiges Material kommt beispielsweise Waffel- oder Nudelteig in Frage, während die fetthaltige Zwischenschicht geschmacklich auf das Nahrungsmittel abgestimmt oder geschmacksneutal sein kann.

Für die Verwendung als Teller ist es besonders vorteilhaft, wenn erfindungsgemäß die Innenschicht wenigstens im Bodenbereich weitgehend schnittfest ausgebildet ist.

Da die Innenschicht sonst nur eine Schutzfunktion für die Zwischenscht zu übernehmen hat, kann sie sehr dünn ausgebildet sein; wird jedoch auch eine mechanische Beanspruchung vorgesehen, wie dies beispielsweise für den Bodenbereich eines Tellers oder eines Bechers in dem umgerührt werden soll der Fall ist, so hat sich die schnittfeste und damit etwas dickere Ausgestaltung des Bodenbereiches sehr bewährt.

Eine weitere vorteilhafte Ausgestaltung der Erfindung liegt auch darin, daß die Zwischenschicht aus einer eß- und/oder verrottbaren Folie besteht.

Hierfür sind die unterschiedlichsten Materialien denkbar, es muß sich nur um eine Folie handeln, die zumindest leicht verrottbar ist. Es sind jedoch auch beispielsweise aus Stärke od.dgl. hergestellte Folien bekannt, die eßbar sind.

In der Zeichnung ist die Erfindung anhand zweier Ausführungsbeispiele veranschaulicht. Dabei zeigen:

Fig.1    eine Schnittdarstellung eines Trinkbechers für die Verwendung in einem Milchautomaten und

Fig.2    eine Schnittdarstellung eines Tellers.

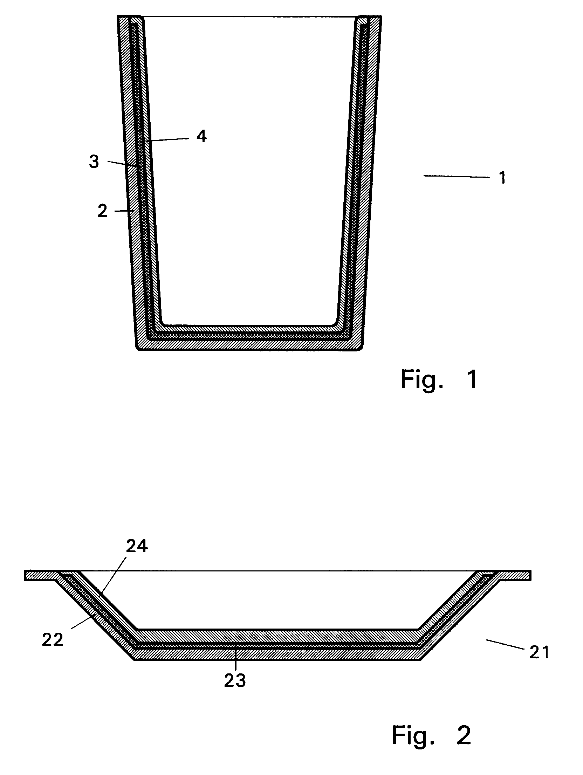

Mit 1 ist in Fig.1 ein als Trinkbecher ausgebildetes Gefäß bezeichnet, das aus drei Schichten 2, 3 und 4 aufgebaut ist. Die Außenschicht 2 besteht beim dargestellten Ausführungsbeispiel aus einem Waffelteig, welcher dem Trinkbecher 1 die notwendige Steifigkeit verleiht. Die Innenschicht 4 besteht dagegen aus einem verhältnismäßig harten Nudelteig, welcher zumindest gegenüber kalten Flüssigkeiten, wie z.B. Milch weitgehend beständig ist. Die Zwischenschicht 3 ist durch diese Innenschicht 4 vollständig abgedeckt und besteht aus einer pastenförmigen, fetthaltigen Masse, welche durch eventuell durch die Innenschicht durchdringende Flüssigkeit nicht angelöst wird und somit die Flüssigkeit wirksam von der Außenschicht fernhält. Insbesondere bei längerer Standzeit der in den Trinkbecher 1 eingefüllten Flüssigkeit im Behälter kann es durchaus sein, daß die Innenschicht 4 angelöst und dabei weich wird; trotzdem behält diese Innenschicht ihre mechanische Schutzfunktion für die Zwischenschicht 3, so daß diese keiner mechanischen Belastung ausgesetzt wird und damit ihrerseits als Schutzschicht für die Außenschicht in Funktion bleibt.

Für die drei Schichten können dabei die unterschiedlichsten Materialien zum Einsatz kommen. Besonders bewährt haben sich jedoch für die Außen- und Innenschicht mehlhaltige Materialien und für die Zwischenschicht eine fetthaltige Masse die mehr oder weniger aushärten kann.

Beim Ausführungsbeipiel nach Fig.2 ist das Gefäß als Teller 21 ausgebildet, wobei sowohl die Außenschicht 22 als auch die Innenschicht 24 aus einem verhältnismäßig harten Nudelteig hergestellt sind, während die Zwischenschicht 23 aus einer fetthaltigen geschmacksneutralen Masse besteht. Die Innenschicht 24 ist dabei im Bereich der Umfangswand des Tellers verhältnismäßig dünn ausgebildet, während sie im Bodenbereich dicker und sehr hart ist. Damit ist dieser Bodenbereich auch größerer mechanischer Belastung, wie sie z.B. beim Schneiden von Nahrungsmitteln auftritt, gewachsen.

**Patentansprüche**

1. Gefäß zur Aufnahme von flüssigen und/oder festen Nahrungsmitteln wenigstens während des Verzehrs, **dadurch gekennzeichnet**, daß die Wände des Gefäßes(1,21) aus wenigstens drei Schichten gebildet sind, die aus eß- und/oder verrottbarem Material bestehen.

2. Gefäß nach Anspruch 1, **dadurch gekennzeichnet**, daß die äußere Schicht(2,22) aus einem verhältnismäßig festen Material besteht, während die Zwischenschicht(3,23) aus einem nicht oder nur schwach härtenden Material besteht, das weitgehend flüssigkeitsbeständig ist.

3. Gefäß nach Anspruch 1 oder 2, **dadurch gekennzeichnet**, daß die Innenschicht(4,24) aus einem weitgehend festen Material besteht.

4. Gefäß nach einem der vorhergehenden Ansprüche, **dadurch gekennzeichnet**, daß Außen- und Innenschicht(2,4,22,24) aus einem mehlhaltigen Material bestehen, während die Zwischenschicht(3,23) fetthaltig ausgebildet ist.

5. Gefäß nach einem der vorhergehenden Ansprüche, **dadurch gekennzeichnet**, daß die Innenschicht(4,24) wenigstens im Bodenbereich weitgehend schnittfest ausgebildet ist.

6. Gefäß nach Anspruch 1, dadurch gekennzeichnet, daß die Zwischenschicht(3,23) aus einer eß- und/oder verrottbaren Folie besteht.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | WO-A-8 301 726 (LOCOLAS)<br>ZUSAMMENFASSUNG<br>* Seite 4, Zeile 14 - Zeile 34; Abbildungen 1-3<br>* <br><br>----- | 1-3<br>4-6 | B65D65/46 |
| | | | **RECHERCHIERTE SACHGEBIETE (Int. Cl.5 )**<br><br>B65D<br>A21D<br>A23G |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | VANTOMME M.A. |